# EUROPÄISCHE PATENTSCHRIFT

(11) **EP 2 574 402 B1**
(45) Veröffentlichungstag und Bekanntmachung des Hinweises auf die Patenterteilung: **18.03.2015**
(21) Anmeldenummer: 12006173.4
(22) Anmeldetag: 29.08.2012
(51) Int. Cl.: B01L 3/02, B01L 3/00, G01N 35/00

(54) **SPRITZE MIT SPRITZENZYLINDER MIT KODIERUNG UND PRÜFELEMENTEN**
NOZZLE HAVING CYLINDER WITH CODING AND CONTROL ELEMENTS
SERINGUE AVEC CYLINDRE AVEC CODAGE ET DES ELEMENTS DE CONTROLES

(30) Priorität: 30.09.2011 DE 102011114591
(43) Veröffentlichungstag der Anmeldung: 03.04.2013
(73) Patentinhaber: EPPENDORF AG, 22339 Hamburg (DE)
(72) Erfinder: Löhn, Jürgen, 27419 Gross Meckelsen (DE)
(74) Vertreter: Hauck Patentanwaltspartnerschaft mbB

(56) Entgegenhaltungen:
- EP-A2- 0 657 216
- EP-A2- 0 691 158
- DE-A1-102009 034 897
- US-A1- 2011 088 493

## Beschreibung

Die Erfindung betrifft eine Spritze mit einer Codierung für den Gebrauch mit einer Dosiervorrichtung mit einer Abtasteinrichtung zum Abtasten der Codierung und ein Spritzensystem umfassend mehrere Spritzen mit verschiedenen Codierungen. Ferner betrifft die Erfindung eine Dosiervorrichtung mit einer Abtasteinrichtung zum Abtasten einer Codierung für den Gebrauch mit einer Spritze mit einer Codierung. Ferner betrifft die Erfindung ein Dosiersystem umfassend eine Spritze mit einer Codierung und eine Dosiervorrichtung mit einer Abtasteinrichtung zum Abtasten der Codierung. Schließlich betrifft die Erfindung ein Verfahren zum Betreiben eines Dosiersystems umfassend eine Spritze mit einer Codierung und eine Dosiervorrichtung mit einer Abtasteinrichtung zum Abtasten der Codierung.

Spritzen und Dosiervorrichtungen umfassende Dosiersysteme dienen der Dosierung von Flüssigkeiten und werden insbesondere in biologischen, chemischen und medizinischen Labors eingesetzt. Als Dispenser ausgeführte Dosiervorrichtungen ermöglichen die schrittweise Abgabe einer Flüssigkeit aus einer Spritze. Dabei kann die Dosiermenge pro Abgabeschritt einstellbar sein. Ein Dispenser mit Dosiermengeneinstellung ist aus der DE 29 26 691 C2 bekannt.

Für Dosiervorrichtungen werden vielfach Spritzen unterschiedlicher Größe angeboten. Diese haben zumeist unterschiedliche Querschnittsabmessungen. Bei Übergang auf eine andere Spritzengröße stimmt die eingestellte Dosiermenge nicht mehr mit der tatsächlichen Dosiermenge überein. Deshalb sind Dosiervorrichtungen bekannt geworden, bei denen die Spritze eine Codierung aufweist, die von einer Abtasteinrichtung der Dosiervorrichtung gelesen wird. Eine Auswerteeinrichtung ermittelt die tatsächlich eingesetzte Spritzengröße und die tatsächlich eingestellte Dosiermenge, die mittels einer Anzeigeeinrichtung angezeigt werden kann.

Ein Dosiersystem der genannten Art ist aus der EP 0 657 216 B1 und der US 5,620,661A bekannt. Bei diesem Repetierpipettensystem hat die Repetierpipette in einem Pipettengehäuse eine Aufnahme für einen Befestigungsabschnitt einer Spritze und in einem Aufnahmekörper eine Kolbenaufnahme für den Spritzenkolben der Spritze. Zudem sind Befestigungseinrichtungen zum reversiblen Fixieren von Befestigungsabschnitt und Spritzenkolben in ihren Aufnahmen und Kolbenstelleinrichtungen zum Verschieben des Aufnahmekörpers im Pipettengehäuse vorhanden. Die Spritze weist einen Informationsträger mit einer Information über die Spritze und/oder deren Zustand auf und die Repetierpipette hat eine Abtasteinrichtung für die Information auf dem Informationsträger. Der Befestigungsabschnitt und der Spritzenkolben sind durch axiale Öffnungen ihrer Aufnahmen axial in ihre Befestigungspositionen in die Repetierpipette schiebbar, wobei der Informationsträger in eine Abtastposition bezüglich der Abtasteinrichtung gelangt. Der Spritzenflansch weist einen ringförmigen Kranz mit mindestens einer axial gerichteten Abtastfläche mit einer axialen Position als Informationsträger auf, wobei die Spritze in verschiedenen Drehstellungen in die Repetierpipette einsetzbar ist. Die Abtasteinrichtung ist ringförmig mit über den Umfang verteilten Sensoren ausgeführt. Die Sensoren haben von einer der Axialöffnungen zugewandten Stirnseite der Abtasteinrichtung vorstehende, elastisch nachgebende Noppen. Bevorzugt ist eine Auswerteeinrichtung für die von der Abtasteinrichtung gelesene Information und eine Anzeigeeinrichtung für die eingestellte Dosiermenge vorhanden. Für eine reproduzierbare Ausrichtung der Spritze mit ihrem Informationsträger auf die Abtasteinrichtung sind Ausrichtnasen am Befestigungsabschnitt der Spritze und Führungsnuten in der Aufnahme für den Befestigungsabschnitt vorhanden.

Bei einer praktischen Ausführung hat die Spritze am Spritzenflansch sieben Abtastflächen und weist die ringförmige Abtasteinrichtung der Repetierpipette sieben gleichmäßig über den Umfang verteilte Sensoren auf. Ferner ist die Spritze mit sieben über den Umfang gleichmäßig verteilten Ausrichtnasen versehen, die an axial gerichteten Stegen auf einer seitlichen Begrenzungswand der Aufnahme der Repetierpipette geführt sind, um die Abtastflächen auf die Sensoren auszurichten. Die Ausrichtnasen sind oben jeweils beidseitig angeschrägt, um die Stege in die Nuten zwischen den Ausrichtnasen hineinzuführen, wenn diese nicht exakt auf die Stege ausgerichtet sind. Jede Ausrichtnase ist zwischen zwei benachbarten Abtastflächen angeordnet. Die Spritzen werden unter der Produktbezeichnung "Combitips® Plus" und die Pipetten unter der Produktbezeichnung "Multipette® Plus" von der Eppendorf AG vermarktet.

Das Repetierpipettensystem ermöglicht einem Anwender, die Spritzengröße den praktischen Anforderungen entsprechend einzusetzen und die Dosierungsmenge ohne aufwendige Umrechnungsarbeiten einzustellen. Anstatt der Spritzengröße kann die Information auch andere spezifische Daten der Spritze und/oder des Zustandes der Spritze betreffen, beispielsweise den Reinheitszustand oder eine Füllsubstanz der Spritze, die von der Repetierpipette automatisch berücksichtigt wird.

Bei dem bekannten Repetierpipettensystem kann ein Defekt eines oder mehrerer Sensoren der Abtasteinrichtung, ein falsches Einsetzen der Spritze in die Repetierpipette oder das Einsetzen einer ungeeigneten Spritze zu einer fehlerhaften Ermittlung und Anzeige des eingestellten Dosiervolumens führen. Infolgedessen kann es zu Fehldosierungen kommen.

Weitere Dosiersysteme mit eine Codierung aufweisenden Spritzen und Abtasteinrichtungen der Dosiervorrichtung zum Abtasten der Codierung sind aus der EP 0 691 158 B1 und der EP 0 951 306 B1 bekannt. Gemäß EP 0 691 158 B1 ist die Codierung am Kolben der Spritze angeordnet und weist das Pipettiergerät eine Einrichtung zum automatischen Identifizieren der Codierung am Kolben auf. Gemäß EP 0 951 306 B1 hat die Spritze Serien von Vertiefungen an Anbringungsflanschen, die von Sensorschaltern der Dosiervorrichtung gelesen werden, wenn sich die Vertiefungen beim Drehen der Spritze an den Sensorschaltern vorbeibewegen. Auch bei diesen Dosiervorrichtungen kann es aus den genannten Gründen zu Anzeigefehlern kommen.

Davon ausgehend liegt der Erfindung die Aufgabe zugrunde, eine Spritze für den Gebrauch mit einer Dosiervorrichtung, ein Spritzensystem für den Gebrauch mit einer Dosiervorrichtung, eine Dosiervorrichtung für den Gebrauch mit einer Spritze, ein Dosiersystem umfassend eine Spritze und eine Dosiervorrichtung und ein Verfahren zum Betreiben eines Dosiersystems zur Verfügung zu stellen, die bzw. das das Risiko von Fehldosierungen herabsetzt. Zudem soll die Möglichkeit bestehen, die Spritzen so auszuführen, dass sie mit den praktischen Ausführungen der Dosiervorrichtung gemäß EP 0 657 216 B1 kompatibel sind.

Die Aufgabe wird durch eine Spritze mit den Merkmalen von Anspruch 1 gelöst.

Die erfindungsgemäße Spritze mit einem Spritzenzylinder und einem Spritzenkolben für den Gebrauch mit einer Dosiervorrichtung zum Dosieren von Flüssigkeiten im Labor mit einer Aufnahme für den Spritzenzylinder und einer axial verlagerbaren Kolbenaufnahme für den Spritzenkolben umfasst
- eine Codierung am oberen Rand des Spritzenzylinders mit Codierelementen in Form von Erhebungen und Vertiefungen auf sieben in Umfangsrichtung gleichmäßig verteilten Codierpositionen in einer für den Typ der Spritze kennzeichnenden Anordnung,
- Prüfelemente in Form von weiteren Erhebungen und weiteren Vertiefungen auf sieben Prüfpositionen, von denen jede zwischen zwei Codierpositionen angeordnet ist,
- wobei die Codierelemente und die Prüfelemente insgesamt sechs Erhebungen aufweisen, und
- eine Führungsstruktur am Umfang des Spritzenzylinders, die eine bestimmte Lage in Bezug auf die Codierelemente und die Prüfelemente aufweist, um die Spritze an einer weiteren Führungsstruktur in der Aufnahme der Dosiervorrichtung, die eine bestimmte Lage bezüglich einer ringförmigen Abtasteinrichtung der Dosiervorrichtung zum Abtasten der Codierung mit gleichmäßig über den Umfang verteilten Abtastelementen aufweist, mit jedem Codierelement und mit jedem Prüfelement auf ein Abtastelement auszurichten.

Die erfindungsgemäße Spritze hat am oberen Rand des Spritzenzylinders zusätzlich zu der Codierung mit Codierelementen in Form von Erhebungen und Vertiefungen Prüfelemente in Form von weiteren Erhebungen und weiteren Vertiefungen. Die Codierelemente sind auf sieben in Umfangsrichtung gleichmäßig verteilten Codierpositionen angeordnet und die Prüfelemente sind auf sieben Prüfpositionen angeordnet, wobei sich jede Prüfposition zwischen zwei Codierpositionen befindet. Die Erhebungen und Vertiefungen stehen in Axialrichtung der Spritze, d.h. in Richtung der Verlagerung des Spritzenkolbens im Spritzenzylinder, unterschiedlich weit vom Spritzenzylinder vor. Insgesamt weisen die Codierelemente und die Prüfelemente sechs Erhebungen auf. Die Spritze ist grundsätzlich in beliebiger Drehstellung axial in die Aufnahmen einer Dosiervorrichtung für den oberen Bereich des Spritzenzylinders und des Spritzenkolbens einführbar. Eine Führungsstruktur am Umfang des Spritzenzylinders weist eine bestimmte Lage in Bezug auf die Codierelemente und Prüfelemente auf. Hierdurch wird sichergestellt, dass die Führungsstruktur beim Einführen der Spritze in die Aufnahmen mit einer weiteren Führungsstruktur in der Aufnahme einer Dosiervorrichtung mit einer bestimmten Lage bezüglich einer ringförmigen Abtasteinrichtung der Dosiervorrichtung so geführt wird, dass jedes Codierelement und jedes Prüfelement auf jeweils eines der Abtastelemente ausgerichtet wird. Die Abtastelemente sind Sensoren, die feststellen können, ob eine Erhebung auf das Abtastelement ausgerichtet ist. Hierfür können insbesondere Sensoren zum Einsatz verwendet werden, die durch eine Erhebung betätigt werden und durch eine Vertiefung nicht betätigt werden oder Sensoren, die von einer Erhebung in anderer Weise betätigt werden, als von einer Vertiefung. Die Spritze ermöglicht eine Überprüfung, ob die Codierung fehlerfrei abgetastet wird. Nur wenn die Abtasteinrichtung insgesamt sechs Erhebungen abtastet, ist eine fehlerfreie Abtastung der Codierung möglich. Wenn weniger oder mehr als sechs Erhebungen abgetastet werden, liegt ein Fehler vor, der beispielsweise auf einem unrichtigen Einsetzen der Spritze in die Dosiervorrichtung, einem Defekt der Abtastreinrichtung oder der Verwendung einer ungeeigneten Spritze beruhen kann. Durch Feststellung eines Fehlers können Fehldosierungen vermieden werden.

Dadurch, dass die Codierelemente und Prüfelemente insgesamt sechs Erhebungen aufweisen, ist das Abtasten der Codierelemente und Prüfelemente mit einem nur geringen Stromverbrauch und einer geringen Beanspruchung der Abtastelemente verbunden. Außerdem ist die Kraft zum Einsetzen der Spritze und die Dosiervorrichtung gering, weil nur wenige Abtastelemente betätigt werden müssen.

Wie die bereits bekannten Spritzen Combitips® Plus der Eppendorf AG weist die erfindungsgemäße Spritze eine Codierung mit Codierelementen an sieben Codierpositionen auf. Somit ist es möglich, erfindungsgemäße Spritzen mit denselben Codierungen wie die bekannten Spritzen Combitips® Plus herzustellen. Im Unterschied zu den bekannten Spritzen ermöglichen die zusätzlichen Prüfelemente der erfindungsgemäßen Spritzen eine Fehlererkennung beim Abtasten der Codierung. Hierfür werden die erfindungsgemäßen Spritzen in Dosiervorrichtungen mit einer Abtasteinrichtung eingesetzt, die die Codierelemente und die Prüfelemente abtastet. Erfindungsgemäße Spritzen, die dieselbe Codierung und der Codierung zugeordnete Führungsstrukturen wie die Compbitips® Plus aufweisen, sind auch in herkömmliche Dosiervorrichtungen Multipette® Plus einsetzbar, deren Abtasteinrichtung nur die Codierelemente abtastet. Die herkömmliche Dosiervorrichtung Multipette® Plus der Eppendorf AG kann somit auch die Codierung der erfindungsgemäßen Spritzen abtasten und das eingestellte Dosiervolumen anzeigen. Bei dieser möglichen Anwendung entfällt allerdings eine Fehlererkennung aufgrund der Abtastung von Codierelementen und Prüfelementen.

Ein zusätzlicher überraschender Vorteil der erfindungsgemäßen Spritze besteht darin, dass die Prüfelemente als zusätzliche Codierelemente nutzbar sind. Die Prüfelemente sind nämlich bezüglich der Codierelemente an verschiedenen Positionen am oberen Rand des Spritzenzylinders anordenbar. Dies ermöglicht eine zusätzliche Codierung der Spritzen. Beispielsweise können durch die Codierelemente verschiedene Spritzenvolumina wie bei den bekannten Spritzen Combitips® Plus codiert werden. Die Prüfelemente können zusätzliche Eigenschaften der Spritzen codieren. Insbesondere ist es möglich, mittels der Prüfelemente Spritzen mit gleichem Füllvolumen zu differenzieren, die sich durch spezielle Eigenschaften voneinander unterscheiden. Diese Eigenschaften können beispielsweise das Material, den Füllzustand, den Reinheitszustand der Spritzen oder ein darin eingefülltes Medium betreffen.

Bevorzugt haben die Erhebungen und/oder Vertiefungen glatte und/oder ununterbrochene Oberflächen. Die Erfindung bezieht aber auch Spritzen mit Erhebungen und Vertiefungen ein, die von rauen und/oder unterbrochenen Oberflächen gebildet werden, wenn die Position ihrer körperfernen Enden mittels einer Abtasteinrichtung abtastbar ist. Beispielsweise sind Erhebungen und/oder Vertiefungen von der Erfindung einbezogen, die eine Vielzahl paralleler Nuten aufweisen, deren Breite kleiner ist, als der Durchmesser des Tastkopfes eines Abtastelements, sodass das Abtastelement nicht in die Nuten eindringen kann.

Gemäß einer vorteilhaften Ausgestaltung der Spritze weisen die Codierelemente höchstens fünf Erhebungen und die Prüfelemente mindestens eine Erhebung auf. Mit dieser Ausgestaltung können sämtliche Codierungen der herkömmlichen Combitips® Plus verwirklicht werden.

Gemäß einer weiteren Ausgestaltung weist die Spritze eines der nachstehend angegebenen Füllvolumina und Erhebungen nur an den dem jeweiligen Füllvolumen zugeordneten Codierpositionen 1 bis 7 auf, die in einer Draufsicht auf dem oberen Rand des Spritzenzylinders im Uhrzeigersinn nacheinander angeordnet sind, wobei zwischen mindestens zwei Codierpositionen eine Prüfposition mit einer weiteren Erhebung vorhanden ist:
- 0,1 ml Füllvolumen mit Erhebungen an Codierpositionen 4, 6 und 7,
- 0,2 ml Füllvolumen mit Erhebungen an Codierpositionen 3, 6 und 7,
- 0,5 ml Füllvolumen mit Erhebungen an Codierpositionen 2, 6 und 7,
- 1,0 ml Füllvolumen mit Erhebungen an Codierpositionen 2, 5 und 7,
- 2,5 ml Füllvolumen mit Erhebungen an Codierpositionen 2, 4, 5, 6 und 7,
- 5,0 ml Füllvolumen mit Erhebungen an Codierpositionen 2, 3, 5, 6 und 7,
- 10 ml Füllvolumen mit Erhebungen an Codierpositionen 3, 4, 5, 6 und 7,
- 25 ml Füllvolumen mit einer Erhebung an Codierposition 7,
- 50 ml Füllvolumen mit Erhebungen an Codierpositionen 5, 6 und 7.

Die vorstehenden Varianten der Spritze weisen die Codierungen der bekannten Spritzen Combitips® Plus auf. Bei den vorstehenden Codierungen ist die Verteilung der Erhebungen auf die verschiedenen Codierposition jeweils eindeutig einer Spritze mit einem bestimmten Füllvolumen zugeordnet, so dass ohne Kenntnis der Lage einer speziellen Codierposition (z.B. von Codierposition 1) anhand der jeweiligen Verteilung der Erhebungen auf verschiedene Codierpositionen das zugehörige Füllvolumen eindeutig zuordenbar ist. Somit sind die Spritzen grundsätzlich in beliebigen Ausrichtungen, die von den Führungsstrukturen zugelassen werden, in die Dosiervorrichtung einsetzbar.

Gemäß einer weiteren Ausgestaltung weist die Spritze eines der nachstehend angegebenen Füllvolumina und Erhebungen nur an den dem jeweiligen Füllvolumen zugeordneten Prüfpositionen 1 bis 7 auf, die in einer Draufsicht auf den oberen Rand des Spritzenzylinders im Uhrzeigersinn nacheinander angeordnet sind:
- 0,1 ml Füllvolumen mit Erhebungen an den Prüfpositionen 1, 2 und 4,
- 0,2 ml Füllvolumen mit Erhebungen an den Prüfpositionen 1, 3 und 4,
- 0,5 ml Füllvolumen mit Erhebungen an den Prüfpositionen 1, 3 und 4,
- 1,0 ml Füllvolumen mit Erhebungen an den Prüfpositionen 1, 3 und 5,
- 2,5 ml Füllvolumen mit einer Erhebung an der Prüfposition 1,
- 5,0 ml Füllvolumen mit einer Erhebung an der Prüfposition 1,
- 10 ml Füllvolumen mit einer Erhebung an der Prüfposition 1,
- 25 ml Füllvolumen mit Erhebungen an den Prüfpositionen 1, 2, 3, 4 und 5,
- 50 ml Füllvolumen mit Erhebungen an den Prüfpositionen 1, 2 und 3.

Diese Varianten haben die Codierungen der bekannten Combitips® Plus und Prüfelemente mit Erhebungen an spezifischen Positionen, wobei die Codierelemente und die Prüfelemente insgesamt sechs Erhebungen aufweisen. Grundsätzlich können die Prüfelemente mit Erhebungen auch an anderen Prüfpositionen angeordnet werden, wenn die jeweilige Anzahl der Erhebungen nicht verändert wird. Hierdurch sind Differenzierungen von Spritzen mit demselben Dosiervolumen möglich. Auch bei diesen Varianten ist die Verteilung der Erhebungen auf verschiedene Codierpositionen und Prüfpositionen jeweils eindeutig einer Spritze mit einem bestimmten Füllvolumen zugeordnet.

Gemäß einer weiteren Ausgestaltung weist die Führungsstruktur Führungselemente auf, die auf Positionen am Umfang des Spritzenzylinders angeordnet sind, deren Abstand voneinander einem Siebtel oder einem Mehrfachen von einem Siebtel des Umfangs des Spritzenzylinders entspricht, um die Spritze an einer weiteren Führungsstruktur einer Dosiervorrichtung mit den Codierelementen auf Abtastelemente für Codierelemente und mit den Prüfelementen auf Abtastelemente für Prüfelemente auszurichten. Gemäß einer bevorzugten Ausgestaltung sind sieben Führungselemente am Umfang des Spritzenzylinders angeordnet, wobei der Abstand benachbarter Führungselemente voneinander jeweils einem Siebtel des Umfanges des Spritzenzylinders entspricht. Durch die Ausrichtung der Codierelemente auf zugeordnete Abtastelemente für Codierelemente der Dosiervorrichtung wird das Auswerten der Codierung erleichtert. Zudem werden durch die Ausrichtung der Prüfelemente auf Abtastelemente für Prüfelemente die Möglichkeiten ergänzender Codierungen mit Hilfe der Prüfelemente erweitert. Ferner wird hierdurch erreicht, dass beim Einsetzen erfindungsgemäßer Spritzen in herkömmliche Pipetten Multipette® Plus die Codierelemente auf die Abtastelemente der Abtasteinrichtung ausgerichtet werden, sodass das eingestellte Dosiervolumen angezeigt wird.

Gemäß einer Ausgestaltung sind die Führungselemente am Umfang des Spritzenzylinders oder am Umfang eines Befestigungsabschnittes des Spritzenzylinders angeordnet. Gemäß einer weiteren Ausgestaltung sind die Führungselemente Ausrichtnasen, zwischen denen Spalte vorhanden sind. Die Ausrichtnasen dienen dazu, axiale Rippen in einer Aufnahme einer Dosiervorrichtung für Spritzen in die Spalte zwischen den Ausrichtnasen einzuführen.

Gemäß einer weiteren Ausgestaltung sind die Ausrichtnasen jeweils in radialer Richtung bezüglich der Mittelachse des Spritzenzylinders neben den Prüfelementen und sind die Spalte in radialer Richtung neben den Codierelementen angeordnet.

Gemäß einer anderen Ausgestaltung sind die Führungsstrukturen so ausgebildet, dass beim Einsetzen der Spritze in die Dosiervorrichtung die Codierelemente und die Prüfelemente beliebigen Abtastelementen zugeordnet werden. Die Auswerteeinrichtung der erfindungsgemäßen Dosiervorrichtung kann durch Auswertung der betätigten Abtastelemente die Codierung durch die Codierelemente und ggfs. eine ergänzende Codierung durch die Prüfelemente ermitteln, falls jede Spritze mit einem charakteristischen Muster aus Codierelementen und Prüfelementen versehen ist.

Die Spritze ist vorzugsweise aus Kunststoff hergestellt. Der Spritzenzylinder und der Spritzenkolben können aus demselben oder aus verschiedenen Kunststoffen hergestellt sein. Gemäß einer weiteren Ausgestaltung ist der Spritzenzylinder aus Polypropylen oder Polyethylen oder zyklisch olefinischem (CO) Polymer und/oder der Spritzenkolben aus Polyethylen oder Polypropylen hergestellt. Bevorzugt besteht der Spritzenzylinder aus Polypropylen und der Spritzenkolben aus Polyethylen.

Ferner wird die Aufgabe durch ein Spritzensystem mit den Merkmalen von Anspruch 7 gelöst.

Das erfindungsgemäße Spritzensystem umfasst mindestens zwei Spritzen mit verschiedenen Codierungen gemäß einem der Ansprüche 1 bis 6.

Das erfindungsgemäße Spritzensystem ermöglicht dem Anwender, je nach Einsatzfall bestimmte Spritzen des Spritzensystems auszuwählen und mit Hilfe einer Dosiervorrichtung zu benutzen. Die ausgewählten Spritzen sind durch ihre Codierung gekennzeichnet. Die Codierungen sind mittels einer erfindungsgemäßen Dosiervorrichtung lesbar, wobei mit Hilfe der Prüfelemente eine Plausibilitätsüberprüfung vorgenommen wird.

Ferner wird die Aufgabe durch eine Dosiervorrichtung mit den Merkmalen von Anspruch 8 gelöst.

Die erfindungsgemäße Dosiervorrichtung für den Gebrauch mit einer Spritze mit einem Spritzenkolben und einem Spritzenzylinder zum Dosieren von Flüssigkeit im Labor umfasst
- eine Aufnahme für das obere Ende des Spritzenzylinders,
- einen Aufnahmekörper mit einer Kolbenaufnahme für das obere Ende des Spritzenkolbens,
- Halteeinrichtungen zum lösbaren Halten des oberen Endes des Spritzenzylinders und des oberen Endes des Spritzenkolbens in ihren Aufnahmen,
- Kolbenstelleinrichtungen zum Verschieben des Aufnahmekörpers relativ zur Aufnahme,
- eine in der Aufnahme angeordnete ringförmige Abtasteinrichtung mit wenigstens 14 gleichmäßig über den Umfang verteilten Abtastelementen,
- eine Führungsstruktur am Umfang der Aufnahme zum Ausrichten einer weiteren Führungsstruktur am Umfang des Spritzenzylinders einer Spritze, um sieben gleichmäßig über den oberen Rand des Spritzenzylinders verteilte Codierelemente in Form von Erhebungen und Vertiefungen in einer für den Typ der Spritze kennzeichnenden Anordnung einer Codierung der Spritze und zwischen den Codierelementen angeordnete Prüfelemente in Form von weiteren Erhebungen und Vertiefungen, wobei die Codierelemente und die Prüfelemente insgesamt sechs Erhebungen aufweisen, auf die Abtastelemente des Ringsensors auszurichten, und
- eine mit den Abtastelementen verbundene Auswerteeinrichtung, die so beschaffen ist, dass sie beim Betätigen von genau sechs Abtastelementen eine fehlerfreie Abtastung feststellt und die Dosiervorrichtung nur im Falle einer fehlerfreien Abtastung in einen Betriebszustand steuert, der von der durch Auswertung der betätigten Abtastelemente ermittelten Codierung einer Spritze abhängt.

Die Dosiervorrichtung hat eine Abtasteinrichtung sowie eine weitere Führungsstruktur zum Ausrichten einer Spritze an ihrer Führungsstruktur mit den Codierelementen und Prüfelementen auf jeweils ein Abtastelement. Die Dosiervorrichtung hat 14 oder 21 oder 28 oder ein anderes Vielfaches von 7 Abtastelemente, wobei sie mindestens 14 Abtastelemente aufweist. Die Abtastelemente sind parallel zur Verschieberichtung des Aufnahmekörpers für das obere Ende des Spritzenkolbens gerichtet. Die Dosiervorrichtung weist eine Auswerteeinrichtung auf, die eine fehlerfreie Abtastung feststellt, wenn genau sechs Abtastelemente betätigt werden. In diesem Falle werden nämlich genau sechs Erhebungen der Spritze abgetastet, was eine fehlerfreie Abtastung anzeigt. Die Meldung über die fehlerfreie Abtastung kann rein geräteintern erfolgen oder zusätzlich extern dem Anwender in einem Display angezeigt werden. Im Falle einer fehlerfreien Abtastung steuert die Auswerteeinrichtung die Dosiervorrichtung in einen Betriebszustand, der von der ermittelten Codierung der Spritze abhängt. Der Betriebszustand der Dosiervorrichtung umfasst beispielsweise die Anzeige bzw. eine andere Ausgabe eines eingestellten Dosiervolumens. Ferner kann der Betriebszustand den Betrieb eines Antriebs der Kolbenstelleinrichtungen mit einer bestimmten Leistung und/oder Geschwindigkeit oder mit einem bestimmten Leistungsprofil und/oder Geschwindigkeitsprofil umfassen. Die Leistung und/oder Geschwindigkeit kann insbesondere in Abhängigkeit von dem Material und/oder der Größe der Spritze gesteuert werden. Ferner kann der Betriebszustand einen bestimmten Verfahrweg der Antriebseinrichtung für die Kolbenstelleinrichtung umfassen. So kann beispielsweise bei Einsatz von Spritzen unterschiedlicher Länge der Verfahrweg der Kolbenstelleinrichtung automatisch angepasst werden oder bei einem vorgegebenen Dosiervolumen der hierfür erforderliche Verfahrweg in Abhängigkeit von der eingesetzten Spritze automatisch eingestellt werden.

Die erfindungsgemäße Dosiervorrichtung wird mit erfindungsgemäßen Spritzen benutzt, um Fehldosierungen zu vermeiden.

Gemäß einer Ausgestaltung ist die Auswerteeinrichtung so beschaffen, dass sie die Dosiervorrichtung beim Betätigen einer anderen Anzahl als sechs Abtastelemente in einen Fehlerzustand steuert. Der Fehlerzustand der Dosiervorrichtung kann die Anzeige und/oder eine andere Ausgabe einer Fehlermeldung und/oder von Hinweisen auf mögliche Fehlerquellen und/oder auf deren Beseitigung und/oder ein Unterbinden von Dosierungen umfassen.

Die Erfindung umfasst Dosiervorrichtungen, die als Handdosiervorrichtungen ausgebildet sind, d.h. die ein handgriffähnliches Gehäuse aufweisen, das der Benutzer beim Dosieren in einer Hand halten kann, um die Spritze auf den Ort der Flüssigkeitsaufnahme und der Flüssigkeitsabgabe zu richten. Ferner umfasst die Erfindung stationäre Dosiervorrichtungen. Ferner umfasst die Erfindung Dosiervorrichtungen, bei denen die Kolbenstelleinrichtung und/oder die Einrichtungen zum Halten der Spritze in der Dosiervorrichtung und/oder zum Lösen der Spritze von der Dosiervorrichtung mittels Muskelkraft antreibbar sind. Ferner umfasst die Erfindung Dosiervorrichtungen, bei denen sämtliche oder ein Teil der genannten Einrichtungen mittels eines (vorzugsweise elektrischen) Antriebsmotors antreibbar sind. Des Weiteren umfasst die Erfindung Dosiervorrichtungen, bei denen sämtliche oder ein Teil des genannten Einrichtungen mittels eines Servoantriebes antreibbar sind, d.h. mittels eines (vorzugsweise elektrischen) Antriebsmotors, der den Einsatz von Muskelkraft unterstützt. Ferner bezieht die Erfindung Dosiervorrichtungen ein, die eine elektronische Abtasteinrichtung und eine elektronische Auswerteeinrichtung und ggfs. elektronische Anzeigeeinrichtungen (z.B. LCD-Display) bzw. eine andere elektronische Ausgabeeinrichtung aufweisen.

Die Abtasteinrichtung kann mechanische, elektrische, optische, magnetische, induktive, kapazitive oder akustische Abtastelemente aufweisen. Auch Kombinationen der vorher erwähnten Abtastelemente sind möglich. Bevorzugt sind die Abtastelemente Mikroschalter.

Die Auswerteeinrichtung ist bevorzugt eine elektronische Auswerteeinrichtung. Es kommt aber auch eine rein mechanische Auswerteeinrichtung oder eine andere Auswerteeinrichtung in Betracht.

Die Abtasteinrichtung und/oder die Auswerteeinrichtung und/oder die Anzeigeeinrichtung können insbesondere so ausgeführt sein, wie in der EP 0 657 216 B1 und der US 5,620,661A beschrieben. Die diesbezüglichen Ausführungen in den genannten Patentveröffentlichungen werden durch Bezugnahme in die vorliegende Anmeldung einbezogen.

Ferner wird die Aufgabe durch ein Dosiersystem mit den Merkmalen von Anspruch 10 gelöst.

Das erfindungsgemäße Dosiersystem umfasst mindestens eine Spritze gemäß einem der Ansprüche 1 bis 7 und eine Dosiervorrichtung gemäß einem der Ansprüche 8 bis 9.

Das erfindungsgemäße Dosiersystem umfasst die vorteilhaften Wirkungen, die oben hinsichtlich der Spritze und der Dosiervorrichtung angegeben sind.

Ferner wird die Aufgabe durch ein Verfahren mit den Merkmalen von Anspruch 11 gelöst.

Bei dem erfindungsgemäßen Verfahren zum Betreiben eines Dosiersystems gemäß Anspruch 10 wird
- eine Spritze gemäß einem der Ansprüche 1 bis 6 mit der Dosiervorrichtung gemäß einem der Ansprüche 8 bis 9 unter Ausrichtung der Codierelemente und der Prüfelemente auf die Abtastelemente der Dosiervorrichtung lösbar verbunden,
- werden die Codierelemente und Prüfelemente mittels der Abtasteinrichtung abgetastet und
- steuert die Auswerteeinrichtung die Dosiervorrichtung nur dann, wenn sie das Betätigen von sechs Abtastelementen feststellt, in einen Betriebszustand, der von der durch die Abtasteinrichtung ermittelten Codierung abhängt.

Bei diesem Verfahren ist sichergestellt, dass ein Betriebszustand der Dosiervorrichtung, der von der ermittelten Codierung abhängt, nur dann erreicht wird, wenn die Prüfung ergeben hat, dass die Codierelemente und Prüfelemente fehlerfrei abgelesen werden. Auf diese Weise werden Fehldosierungen vermieden.

Gemäß einer Ausgestaltung ermittelt die Auswerteeinrichtung dann, wenn sie eine andere Anzahl als sechs Abtastelemente feststellt, eine fehlerhafte Abtastung und steuert die Dosiervorrichtung in einen Fehlerzustand. Der Fehlerzustand kann insbesondere die Anzeige und/oder eine andere Ausgabe einer Fehlermeldung und/oder von Hinweisen auf mögliche Fehlerquellen und/oder auf deren Beseitigung und/oder ein Unterbinden von Dosierungen umfassen.

Die Erfindung wird nachfolgend anhand der anliegenden Zeichnungen von Ausführungsbeispielen näher erläutert.

In den Zeichnungen zeigen:
- Fig. 1a-d: einen Spritzenzylinder einer Spritze mit einem Füllvolumen von 1,0 ml in Seitenansicht (Fig. 1a), Ansicht von oben (Fig. 1b), Ansicht von unten (Fig. 1c) und in einer vergrößerten Teilperspektive schräg von oben und von der Seite (Fig. 1d);
- Fig. 2: einen Spritzenkolben derselben Spritze in einer Seitenansicht;
- Fig. 3a-c: dieselbe Spritze zusammengesetzt in Seitenansicht (Fig. 3a), Ansicht von oben (Fig. 3b) und Ansicht von unten (Fig. 3c);
- Fig. 4a-i: die Anordnung der Erhebungen und Vertiefungen der Codierelemente und Prüfelemente der Spritze mit einem Füllvolumen von 0,1 ml (Fig. 4a), 0,2 ml (Fig. 4b), 0,5 ml (Fig. 4c), 1,0 ml (Fig. 4d), 2,5 ml (Fig. 4e), 5,0 ml (Fig. 4f), 10 ml (Fig. 4g), 25 ml (Fig. 4h), 50 ml (Fig. 4i) jeweils in einer Abwicklung;
- Fig. 5: die Spritze von Fig. 1 bis 3 eingesetzt in eine Pipette in einer teilweise ausgebrochenen Seitenansicht;
- Fig. 6: den ausgebrochenen Teil des Dosiersystems von Fig. 5 in einer vergrößerten Detailansicht;
- Fig. 7: die Dosiervorrichtung von Fig. 5 in einer vergrößerten Unteransicht.

Bei der nachfolgenden Erläuterung beziehen sich die Angaben "oben" und "unten" auf die bevorzugte Ausrichtung der Spritze und der Dosiervorrichtung im Betrieb, wobei die Spritze und die Dosiervorrichtung jeweils senkrecht ausgerichtet sind, die Spritze ihre Codierelemente und Prüfelemente am oberen Ende und die Dosiervorrichtung ihre Aufnahme mit der Abtasteinrichtung am unteren Ende aufweist. Bei dieser Ausrichtung ist die Spritze mit ihrer Aufnahme- und Abgabeöffnung unten angeordnet, insbesondere wenn die Spritze in die Dosiervorrichtung eingesetzt ist.

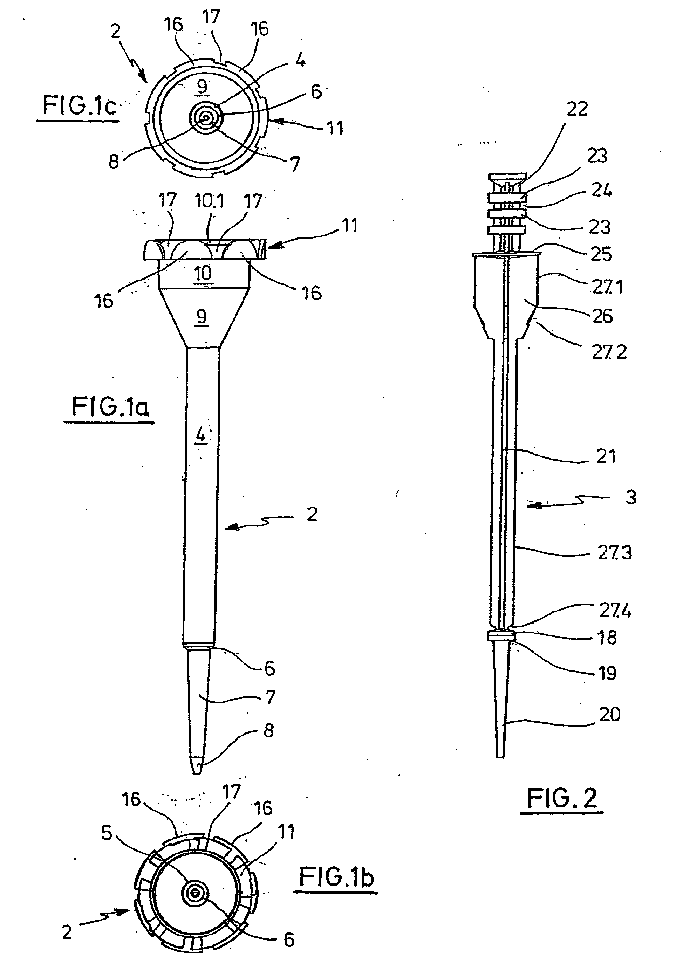

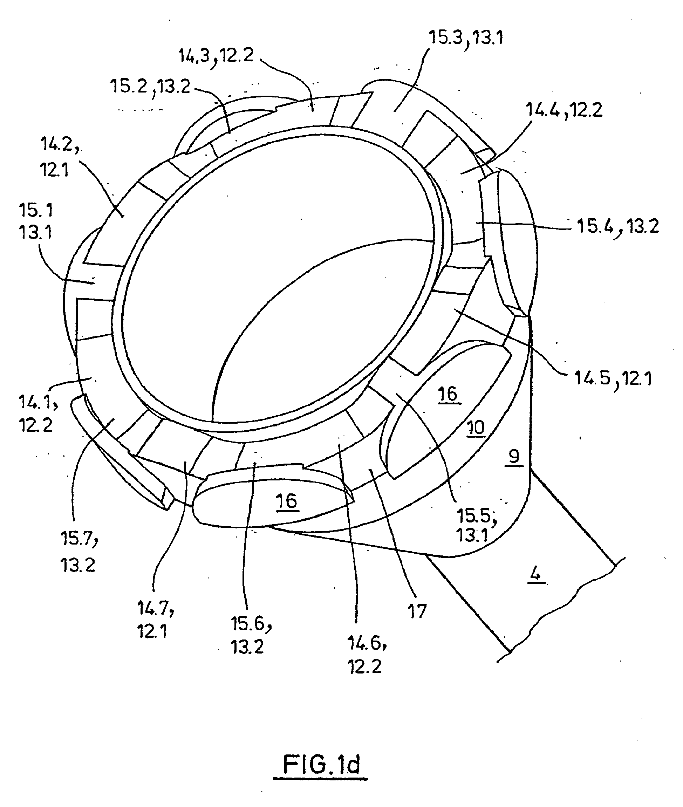

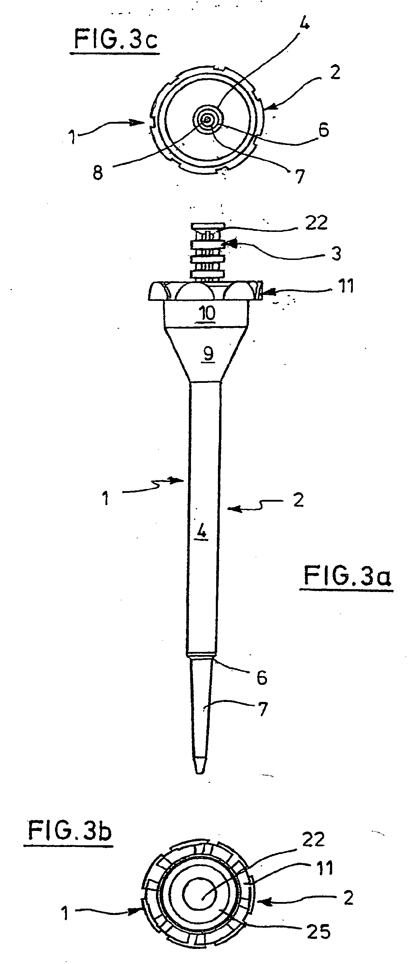

In den Fig. 1 bis 3 ist eine Spritze 1 mit einem Füllvolumen von 1,0 ml gezeigt. Sie weist einen Spritzenzylinder 2 und einen Spritzenkolben 3 auf. Der Spritzenzylinder 2 ist nicht in geometrischer Hinsicht überall streng zylindrisch. Er hat einen innen und außen zylindrischen Zylinderabschnitt 4, der innen einen zylindrischen Kolbenlaufbereich 5 aufweist.

Das untere Ende des Zylinderabschnitts 4 ist über einen Absatz 6 mit einem innen und außen konischen Spitzenabschnitt 7 verbunden, an den sich unten ein stärker konischer Konusabschnitt 8 anschließt.

Bei erfindungsgemäßen Spritzen größeren Volumens kann der Absatz 6 als Boden ausgebildet sein, mit einem zentralen Loch, an das sich der konische Spitzenabschnitt 7 anschließt. Bei Spritzen mit geringerem Volumen kann der Absatz 6 vollständig entfallen und sich der konische Spitzenabschnitt 7 direkt an den Zylinderabschnitt 4 anschließen.

Das obere Ende des Zylinderabschnitts 4 ist mit einem innen und außen konischen Übergangsbereich 9 verbunden, der sich nach oben erweitert. Das obere Ende des Übergangsbereiches 9 ist mit einem innen und außen zylindrischen oberen Zylinderabschnitt 10 verbunden, der als Zentrierbereich dienen kann, wie in der EP 2 279 791 A1 beschrieben. Bei erfindungsgemäßen Spritzen größeren Volumens kann der Übergangsbereich entfallen und der Zylinderabschnitt direkt in den oberen Zylinderabschnitt 10 übergehen.

Der obere Zylinderabschnitt 10 ist wiederum mit einem Befestigungsabschnitt 11 in Form eines kreisringförmigen Flansches verbunden, der den oberen Rand des Spritzenzylinders 2 bildet.

Auf der Oberseite des Befestigungsabschnittes 11 sind Codierelemente 12 und Prüfelemente 13 in Form von axial vorstehenden Erhebungen 12.1, 13.1 und axial zurückstehende Vertiefungen 12.2, 13.2 vorhanden. Die Codierelemente 12 befinden sich auf sieben in Umfangsrichtung gleichmäßig verteilten Codierpositionen 14.1 bis 14.7. Zwischen jeweils zwei Codierelementen 12 ist jeweils ein Prüfelement 13 angeordnet. Die Prüfelemente befinden sich auf sieben gleichmäßig in Umfangsrichtung verteilten Prüfpositionen 15.1 bis 15.7. So sind insgesamt sieben Codierelemente 12 und sieben Prüfelemente 13 in verschachtelter Anordnung am oberen Rand des Spritzenzylinders 2 angeordnet.

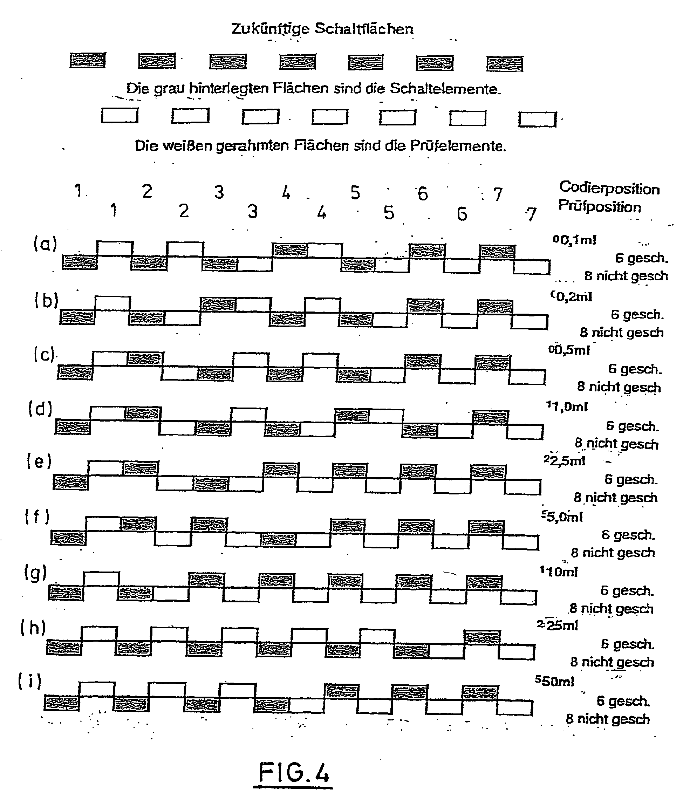

Die Anzahl und Anordnung der Erhebungen 12.1 und Vertiefungen 12.2 der Codierelemente 12 codiert für eine Spritze 1 mit einem bestimmten Volumen. Dies wird unten anhand von Fig. 4 näher erläutert.

Am Umfang des Befestigungsabschnittes 11 sind sieben Ausrichtnasen 16 vorhanden. Die Ausrichtnasen 16 sind gleichmäßig über den Umfang verteilt. Sie sind durch Vorsprünge auf dem Umfang gebildet. Die beiden Seitenflächen jeder Ausrichtnase 16 konvergieren nach oben. Im Beispiel konvergieren sie bogenförmig. Zwischen benachbarten Ausrichtnasen 16 ist ein Spalt 17 vorhanden. Jeder Spalt 17 ist genau unterhalb eines Codierelements 12 angeordnet. Insgesamt sind sieben Spalte 17 vorhanden. Die Ausrichtnasen 16 sind Führungselemente von Führungsstrukturen.

Im Beispiel sind die Übergänge zwischen den benachbarten Erhebungen 12.1, 13.1 und Vertiefungen 12.2, 13.2 gerundet. In Fig. 1b und d sind auf der Oberseite des Befestigungsabschnittes 11 Linien an den Stellen gezeichnet, an denen sich verschiedene Krümmungsradien oder Krümmungsradien und Ebenen treffen.

Der obere Zylinderbereich 10 hat am Innenumfang des Flansches eine zumindest bezüglich der Vertiefungen 12.2, 13.2 geringfügig vorstehende, hülsenförmige Verlängerung 10.1, die aus fertigungstechnischen Gründen vorhanden ist. Bei größeren Spritzenvolumina trägt diese Verlängerung 10.1 zur Vermeidung von Beschädigungen von Dichtlippen beim Einführen eines Spritzenkolbens 3 in den Spritzenzylinder 2 bei.

Der Spritzenzylinder 2 ist einteilig aus Kunststoff hergestellt. Bevorzugt ist er durch Spritzgießen eines Thermoplasten hergestellt. Der Thermoplast ist beispielsweise Polypropylen, Polyethylen oder ein zyklisch olefinisches (CO) Polymer, wobei aufgrund seiner Oberflächeneigenschaften und optischen Eigenschaften Polypropylen bevorzugt wird.

Der Spritzenkolben 3 hat einen flachen zylindrischen bzw. kreisscheibenförmigen Kolbenabschnitt 18, der am Umfang eine umlaufende Dichtlippe 19 aufweist. Unten ist der Kolbenabschnitt 18 mit einem Kolbenspitzenabschnitt 20 verbunden, der konisch mit demselben oder einem ähnlich kleinen Konuswinkel wie der Spitzenabschnitt 7 ausgebildet ist.

Der Spritzenkolben 3 weist oben eine Kolbenstange 21 auf. Die Kolbenstange 21 weist oben ein Kupplungsstück 22 auf. Das Kupplungsstück 22 weist mehrere radial vorspringende, umlaufende Kolbenbunde 23 auf, zwischen denen umlaufende Nuten 24 vorhanden sind.

Unterhalb des Kupplungsstückes 22 ist auf der Kolbenstange 21 eine Scheibe 25 angeordnet, die kreisscheibenförmig ausgebildet ist.

Unterhalb der Scheibe 25 sitzen auf der Kolbenstange 21 vier radial vorstehende Flügel 26, die gleichmäßig über den Umfang der Kolbenstange 21 verteilt sind. Oben sind die Flügel mit der Scheibe 25 und unten mit dem Kolbenabschnitt 18 verbunden. Die Flügel 26 haben angrenzend an die Scheibe 25 Außenkanten 27.1, die parallel zur Kolbenstange 21 sind. Dort sind die Flügel 26 am breitesten. Darauf folgt eine erste Anschrägung 27.2, innerhalb der die Breite der Flügel 26 abnimmt. Darauf folgt wiederum eine Außenkante 27.3, die parallel zur Kolbenstange 21 ist. Unten haben die Flügel 26 eine weitere Anschrägung 27.4, innerhalb der die Breite der Flügel 26 weiter abnimmt.

Bei Spritzen mit einem größeren Füllvolumen (ab 2,5ml) haben die Flügel 26 ausgehend von der Scheibe 25 zumindest bis kurz vor dem Kolbenabschnitt 18 eine konstante Breite.

Der Spritzenkolben 3 ist bevorzugt einteilig aus Kunststoff hergestellt. Weiterhin bevorzugt ist er aus einem Thermoplasten spritzgegossen. Beispielsweise ist er aus Polyethylen oder Polypropylen hergestellt, wobei Polyethylen bevorzugt wird, weil die Materialpaarung von Polyethylen für den Spritzenkolben 3 und von Polypropylen über den Spritzenzylinder 2 eine geringe Reibung aufweist. Polypropylen wird für den Spritzenzylinder wegen seiner Oberflächeneigenschaften und optischen Eigenschaften bevorzugt.

Die zylindrischen Abschnitte und Bereiche des Spritzenzylinders 2 und des Spritzenkolbens 3 sind kreiszylindrisch.

Wenn der Kolben 3 vollständig in den Spritzenzylinder 2 eingeschoben ist, sitzt der Kolben 3 mit der Unterkante der Anschrägung 27.2 auf dem unteren Rand des Übergangsbereichs 9 auf. Bei Spritzen mit einem größeren Füllvolumen (z.B. 2,5ml) setzt der Kolbenabschnitt 18 innen auf dem Absatz 6 auf. Bei vollständig eingeschobenem Kolben 3 verbleibt zwischen dem Kolbenspitzenabschnitt 20 und dem Spritzenabschnitt 7 ein kleiner Ringspalt. Die Scheibe 25 taucht unten in den Zentrierbereich 10 ein. Zwischen den Flügeln 26 und dem Kolbenlaufbereich 5 verbleibt ein kleiner Ringspalt, sodass die Außenkanten 27.3 den Spritzenkolben 3 an einem Kippen im Spritzenzylinder 2 hindern. Zwischen der Scheibe 25 und den angrenzenden Außenkanten 27.1 und dem Zentrierbereich 10 ist ein etwas größerer Ringspalt vorhanden, der den Eingriff einer Zentrierhülse gemäß EP 2 279 791 A1 ermöglicht. Das Kupplungsstück 22 ist teilweise im Zentrierbereich 10 angeordnet und steht teilweise über den Befestigungsabschnitt 11 nach oben hinaus.

Vorstehende Angaben gelten grundsätzlich auch für Spritzen mit anderem Füllvolumen.

In Fig. 4 sind Beispiele für Codierungen von Spritzen mit verschiedenen Füllvolumina angegeben. Die Fig. 4a bis i zeigen jeweils die Lage der Erhebungen 12.1, 13.1 und Vertiefungen 12.2, 13.2 am oberen Rand des Befestigungsabschnitts 11 eines Spritzenzylinders 2 in der Abwicklung in einer Ebene eines Vertikalschnittes entlang einer Kreislinie durch den oberen Rand des Spritzenzylinders 2.

Die grauen eingerahmten Flächen bezeichnen jeweils Codierelemente 12 und die weißen eingerahmten Flächen bezeichnen jeweils Prüfelemente 13.

Die oberhalb der jeweiligen horizontalen Linie eingezeichneten Flächen sind jeweils Erhebungen 12.1, 13.1 und die unterhalb derselben horizontalen Linie gezeichneten Flächen sind jeweils Vertiefungen 12.2, 13.2.

Codierelemente 12 und Prüfelemente 13 der Spritze 1 mit einem Füllvolumen von 1,0 ml gemäß Fig. 1 bis 3 ist in Fig. 4d gezeigt. Demnach hat die Spritze 1 an den Codierpositionen 2, 5 und 7 und an den Prüfpositionen 1, 3 und 5 Erhebungen 12.1, 13.1 und ansonsten Vertiefungen 12.2, 13.2. Insgesamt hat jede Spritze sechs Erhebungen und acht Vertiefungen.

Die Codierungen der Codierpositionen stimmen mit den Codierungen der bekannten Combitips® Plus überein.

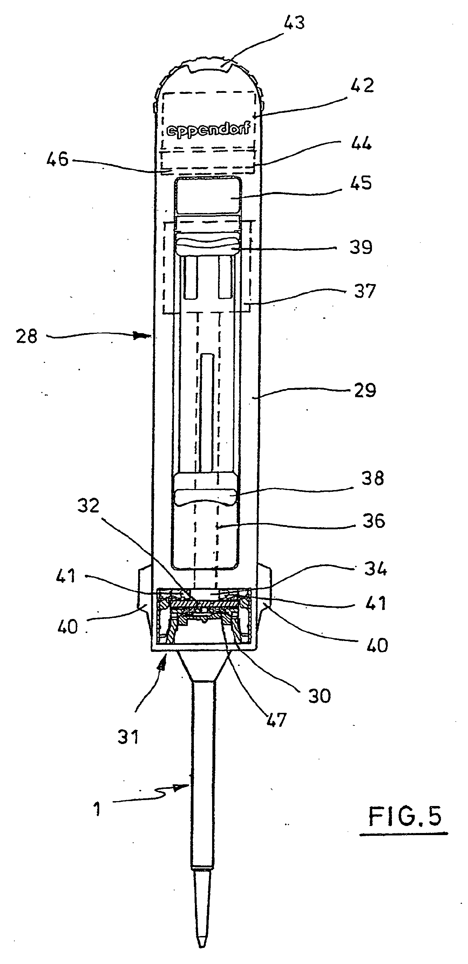

Gemäß Fig. 5 umfasst eine handhabbare Dosiervorrichtung 28 ein Gehäuse 29, das unten eine Aufnahme 30 hat, die durch eine Axialöffnung 31 am unteren Ende von außen zugänglich ist.

Die Aufnahme 30 hat einen etwa kreisrunden Querschnitt.

Am Boden der Aufnahme 30 ist eine ringförmige Abtasteinrichtung 32 angeordnet.

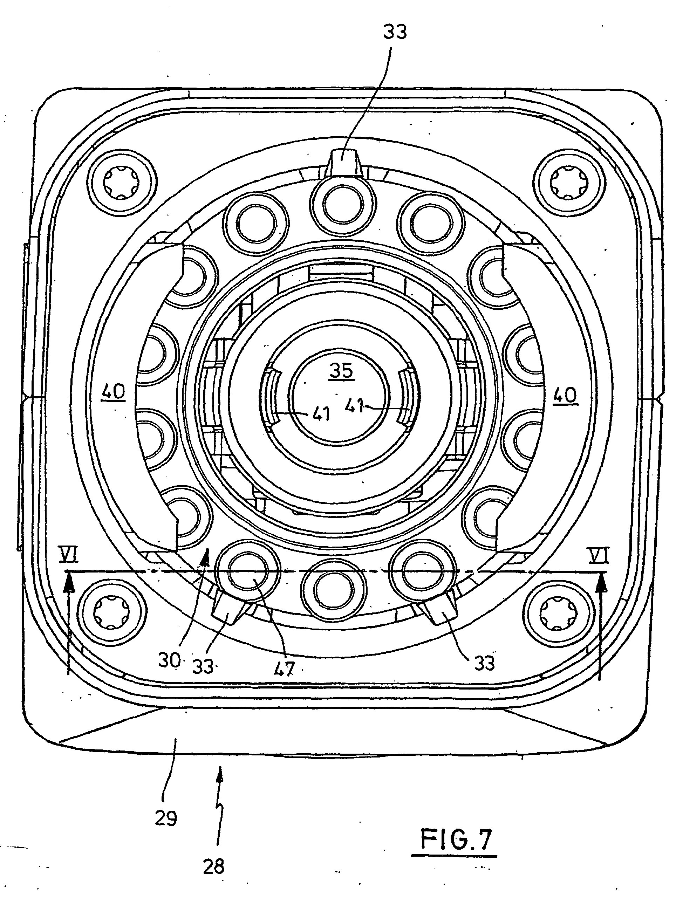

Auf den die Aufnahme seitlich begrenzenden Seitenwänden sind seitliche Führungsmittel in Form von axial verlaufenden Rippen 33 vorhanden. Im Beispiel sind drei Rippen 33 über den Umfang der Aufnahme 30 verteilt (vgl. Fig. 7).

Oberhalb der Aufnahme 30 ist im Gehäuse 29 der Dosiervorrichtung 28 ein Aufnahmekörper 34 mit einer von unten zugänglichen Kolbenaufnahme 35 für das obere Ende des Spritzenkolbens 3 vorhanden, das durch das Kupplungsstück 22 gebildet ist. Der Aufnahmekörper 34 ist am oberen Ende mit einer Antriebsstange 36 von Kolbenstelleinrichtungen 37 zum axialen Verschieben des Aufnahmekörpers 34 im Gehäuse 29 verbunden. Die Kolbenstelleinrichtungen 37 weisen einen Aufziehhebel 38 zum Aufziehen von Flüssigkeit in eine mit der Dosiervorrichtung 28 zu verbindende Spritze 1 auf. Ferner haben sie einen Dosierhebel 39 zum Abgeben von Flüssigkeit aus einer Spritze 1.

Der Aufnahme 30 und dem Aufnahmekörper 34 sind Befestigungseinrichtungen 40, 41 in Form von radial zustellbaren Greifeinrichtungen für einen Spritzenzylinder 2 und für einen Spritzenkolben 3 zugeordnet. Die Befestigungseinrichtungen 40, 41 sind als schwenkbar gelagerte Greifhebel ausgeführt, die beim Lösen einer Spritze 1 von der Dosiervorrichtung 28 zusammenwirken.

Oben am Gehäuse 29 der Dosiervorrichtung 28 ist eine Einstelleinrichtung 42 für eine Dosierschrittweite mit einem Einstellrädchen 43 vorhanden, die mit den Kolbenstelleinrichtungen 37 gekoppelt ist. Ferner befindet sich oben im Gehäuse 29 eine Auswerteeinrichtung 44, die mit der Abtasteinrichtung 32 und der Einstelleinrichtung 42 verbunden ist, um anhand der mittels der Abtasteinrichtung 32 ermittelten Codierung einer eingesetzten Spritze 1 und der mittels der Einstelleinrichtung 42 vorgegebenen Dosierschrittweite das jeweilige Dosier- bzw. Dispensiervolumen zu ermitteln. Hierfür kann die Einstelleinrichtung 42 einen Drehwinkelmessgeber aufweisen, der die Drehstellung des Einstellrädchens 43 ermittelt.

Die Auswerteeinrichtung 44 ist mit einer oben am Gehäuse 29 angeordneten Anzeigeeinrichtung 45 in Form eines LCD-Displays verbunden, welche das jeweils eingestellte Dispensiervolumen zur Anzeige bringt. Ferner enthält das Gehäuse 29 eine Energieversorgung 46 in Form einer Batterie oder eines Akkumulators.

Ein Beispiel für eine Dosiervorrichtung mit den zuvor beschriebenen Merkmalen ist in der EP 0 657 216 A2 und in der US 5,620,661A beschrieben. Die diesbezüglichen Angaben in den vorbezeichneten Patentveröffentlichungen sind durch Bezugnahme in die vorliegende Anmeldung einbezogen.

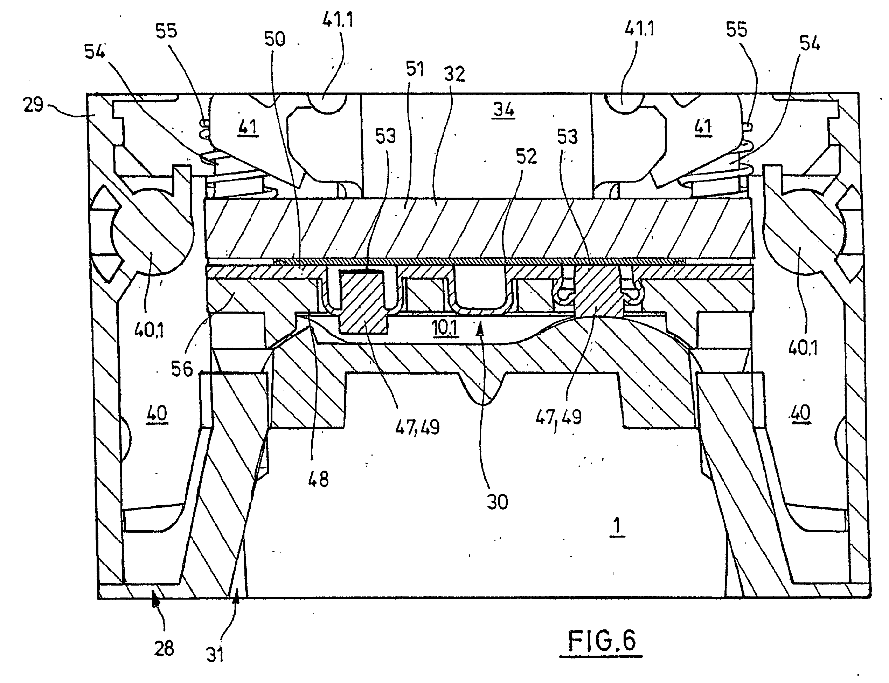

In den Fig. 6 und 7 sind Einzelheiten der ringförmigen Abtasteinrichtung 32 gezeigt. Fig. 6 ist ein Schnitt entlang der Linie VI-VI von Fig. 7. Die Abtasteinrichtung 32 hat 14 gleichmäßig über den Umfang verteilte Sensoren 47. Diese haben von einer Ringfläche 48 der kreisringscheibenförmigen Abtasteinrichtung vorstehende Abtastelemente 49 in Form von Tastknöpfen. Die Abtastelemente 49 sind als Noppen einer Ringscheibe 50 aus Silikon ausgeführt, die auf einer ringförmigen Leiterplatte 51 mit Leiterbahnen 52 an der der Ringscheibe 50 zugewandten Seite sitzen. Oben tragen die Abtastelemente 49 ein elektrisches Leitmaterial 53 in Form einer Leitpille oder eines Leitlackes. Wenn ein Abtastelement 49 hochgedrückt ist, kontaktiert das Leitmaterial 53 zwei Leiterbahnen 52 und verbindet diese elektrisch miteinander. Hierdurch wird ein Schaltkreis geschlossen (Fig. 6, rechts). Nach Entlastung federt das Abtastelement 49 elastisch in seine unbelastete Ausgangsform zurück (Fig. 6, links).

Die Leiterplatte 51 trägt oben vorstehende Stehbolzen 54, die in Löchern einer nicht gezeigten, gehäusefesten Montageplatte axial geführt sind. Auf den Stehbolzen sitzen Schraubenfedern 55, über die sich die Leiterplatte 51 an der Montageplatte federnd abstützt.

Unterhalb der ringförmigen Abtasteinrichtung 32 ist ein ringförmiges Führungsmittel 56 angeordnet, das Beschädigungen der ringförmigen Abtasteinrichtung 32 verhindert. Einzelheiten der Abtasteinrichtung 32 und des ringförmigen Führungsmittels 56 und ihres Zusammenwirkens mit eingesetzten Spritzen sind in der EP 2 236 207 A1 beschrieben. Die diesbezüglichen Ausführungen dieser Patentveröffentlichung sind durch Bezugnahme in die vorliegende Anmeldung einbezogen.

Gemäß Fig. 5 und 6 ist eine durch die Axialöffnung 31 in die Aufnahme 30 eingesetzte Spritze 1 gemäß Fig. 1 bis 3 in der Dosiervorrichtung 28 gehalten. Der Spritzenzylinder 2 ist von den Befestigungseinrichtungen 40 lösbar in der Aufnahme 30 gehalten und der Spritzenkolben 3 ist von den in die Nuten 24 eingreifenden Befestigungseinrichtungen 41 lösbar in dem Aufnahmekörper 34 gehalten. In Fig. 6 sind die Befestigungseinrichtungen 40, 41, die als schwenkbar gelagerte Greifhebel ausgebildet sind, auf den Achsen 40.1, 41,1 von Schwenklagern gezeigt. Die Führungsstrukturen 16 (vgl. Fig. 1) und weiteren Führungsstrukturen 33 (vgl. Fig. 7) richten die Spritze 1 in der Aufnahme 30 in einer Drehstellung aus, in der Codierelemente 12 auf Abtastelemente 49 für Codierelemente und die Prüfelemente 13 auf Abtastelemente 49 für Prüfelemente ausgerichtet sind. Die Spritze 1 stützt sich axial am ringförmigen Führungsmittel 56 ab.

Nur die Codierelemente 12 und Prüfelemente 13, die Erhebungen 12.1, 13.1 aufweisen, betätigen Abtastelemente 49. Die Auswertung der von den Abtastelementen gelieferten Signale durch die Auswerteeinrichtung 44 kann dadurch ausgelöst werden, dass mindestens ein Abtastelement 49 betätigt wird. Nur wenn die Auswerteeinrichtung 44 feststellt, dass sechs Abtastelemente 49 betätigt werden, wird das eingestellte Dosiervolumen angezeigt. Hierfür wird die von den Abtastelementen 49 für Codierelemente 12 erfasste Codierung ausgewertet. Ferner wird die Einstellung der Einstelleinrichtung 42 für die Dosierschrittweite ermittelt. Mit Hilfe dieser Daten errechnet die Auswerteeinrichtung 44 die abgegebene Dosiermenge, und die mittels der Anzeigeeinrichtung 45 zur Anzeige gebracht wird.

Stellt die Auswerteeinrichtung 44 fest, dass weniger oder mehr als sechs Abtastelemente 49 betätigt werden, so gibt die Anzeigeeinrichtung 45 einen Hinweis auf einen Fehler und ggfs. Vorschläge zu dessen Behebung aus.

Durch Betätigung der Befestigungseinrichtungen 40, 41 ist die Spritze 1 von der Dosiervorrichtung 28 lösbar. Dann kann eine weitere Spritze 1 gleichen Typs oder anderen Typs eingesetzt werden, die in der vorbeschriebenen Weise erneut geprüft wird.

## Patentansprüche

1. Spritze mit einem Spritzenzylinder (2) und einem Spritzenkolben (3) für den Gebrauch mit einer Dosiervorrichtung (28) zum Dosieren von Flüssigkeiten im Labor mit einer Aufnahme (30) für den Spritzenzylinder (2) und einer axial verlagerbaren Kolbenaufnahme (35) für den Spritzenkolben (3) umfassend
- eine Codierung am oberen Rand des Spritzenzylinders (2) mit Codierelementen (12) in Form von Erhebungen (12.1) und Vertiefungen (12.2) auf sieben in Umtangsrichtung gleichmäßig verteilten Codierpositionen (14.1 bis 14.7) in einer für den Typ der Spritze (1) kennzeichnenden Anordnung,
- Prüfelemente (13) in Form von weiteren Erhebungen (13.1) und weiteren Vertiefungen (13.2) auf sieben Prüfpositionen (15.1 bis 15.7), von denen jede zwischen zwei Codierpositionen (14.1 bis 14.7) am oberen Rand des Spritzenzylinders (2) angeordnet ist,
- wobei die Codierelemente (12) und die Prüfelemente (13) insgesamt sechs Erhebungen (12.1, 13.1) aufweisen und
- eine Führungsstruktur (16) am Umfang des Spritzenzylinders (2), die eine bestimmte Lage in Bezug auf die Codierelemente (12) und die Prüfelemente (13) aufweist, um die Spritze (1) an einer weiteren Führungsstruktur (33) in der Aufnahme (30) der Dosiervorrichtung (28), die eine bestimmte Lage bezüglich einer ringförmigen Abtasteinrichtung (32) zum Abtasten der Codierung mit gleichmäßig über den Umfang verteilten Abtastelementen (47) der Dosiervorrichtung (28) aufweist, mit jedem Codierelement (12) und mit jedem Prüfelement (13) auf ein Abtastelement (47) auszurichten.

2. Spritze nach Anspruch 1, bei der die Codierelemente (12) höchstens fünf Erhebungen (12.1) und die Prüfelemente (13) mindestens eine Erhebung (13.1) aufweisen.

3. Spritze nach Anspruch 1 oder 2, die eines der nachstehend angegebenen Füllvolumina und Erhebungen (12.1) nur an den dem jeweiligen Füllvolumen zugeordneten Codierpositionen (14.1 bis 14.7) 1 bis 7 aufweist, die in einer Draufsicht auf den oberen Rand des Spritzenzylinders (2) im Uhrzeigersinn hintereinander angeordnet sind, wobei zwischen mindestens zwei Codierpositionen (14.1 bis 14.7) an einer Prüfposition (15.1 bis 15.7) eine weitere Erhebung (13.1) vorhanden ist.
• 0,1 ml Füllvolumen mit Erhebungen an Codierpositionen 4, 6 und 7,
• 0,2 ml Füllvolumen mit Erhebungen an Codierpositionen 3, 6 und 7,
• 0,5 ml Füllvolumen mit Erhebungen an Codierpositionen 2, 6 und 7,
• 1,0 ml Füllvolumen mit Erhebungen an Codierpositionen 2, 5 und 7,
• 2,5 ml Füllvolumen mit Erhebungen an Codierpositionen 2, 4, 5, 6 und 7,
• 5,0 ml Füllvolumen mit Erhebungen an Codierpositionen 2, 3, 5, 6 und 7,
• 10 ml Füllvolumen mit Erhebungen an Codierpositionen 3, 4, 5, 6 und 7,
• 25 ml Füllvolumen mit einer Erhebung an Codierposition 7,
• 50 ml Füllvolumen mit Erhebungen an Codierpositionen 5, 6 und 7.

4. Spritze nach Anspruch 3, die eines der nachstehend angegebenen Füllvolumina und Erhebungen (13.1) nur an den dem jeweiligen Füllvolumen zugeordneten Prüfpositionen (15.1 bis 15.7) 1 bis 7 aufweist, die in einer Draufsicht auf den oberen Rand des Spritzenzylinders (2) im Uhrzeigersinn nacheinander angeordnet sind:
• 0,1 ml Füllvolumen mit Erhebungen an den Prüfpositionen 1, 2 und 4,
• 0,2 ml Füllvolumen mit Erhebungen an den Prüfpositionen 1, 3 und 4,
• 0,5 ml Füllvolumen mit Erhebungen an den Prüfpositionen 1, 3 und 4,
• 1,0 ml Füllvolumen mit Erhebungen an den Prüfpositionen 1, 3 und 5,
• 2,5 ml Füllvolumen mit einer Erhebung an der Prüfposition 1,
• 5,0 ml Füllvolumen mit einer Erhebung an der Prüfposition 1,
• 10 ml Füllvolumen mit einer Erhebung an der Prüfposition 1,
• 25 ml Füllvolumen mit Erhebungen an den Prüfpositionen 1, 2, 3, 4 und 5,
• 50 ml Füllvolumen mit Erhebungen an den Prüfpositionen 1, 2 und 3.

5. Spritze nach einem der Ansprüche 1 bis 4, bei der die Führungsstrukturen (16) auf Positionen am Umfang des Spritzenzylinders (2) angeordnet sind, deren Abstand voneinander einem Siebtel oder einem Mehrfachen von einem Siebtel des Umfangs des Spritzenzylinders (2) entspricht, um die Spritze (1) an einer weiteren Führungsstruktur (33) einer Dosiervorrichtung (28) mit den Codierelementen (12) auf Abtastelemente (47) für Codierelemente und mit Prüfelementen (13) auf Abtastelemente (47) für Prüfelemente auszurichten.

6. Spritze nach einem der Ansprüche 1 bis 5 mit einem Spitzenzylinder (2) aus Polypropylen oder Polyethylen oder zyklisch olefinischem (CO) Polymer und/oder mit einem Spritzenkolben (3) aus Polyethylen oder Polypropylen.

7. Spritzensystem umfassend mindestens zwei Spritzen (1) mit verschiedenen Codierungen gemäß einem der Ansprüche 1 bis 6.

8. Dosiervorrichtung für den Gebrauch mit einer Spritze (1) mit einem Spritzenkelben (3) und einem Spritzenzylinder (2) zum Dosieren von Flüssigkeit im Labor umfassend
- eine Aufnahme (30) für das obere Ende des Spritzenzylinders (2),
- einen Aufnahmekörper (34) mit einer Kolbenaufnahme (35) für das obere Ende des Spritzenkolbens (3),
- Halteeinrichtungen (40, 41) zum lösbaren Halten des oberen Endes des Spritzenzylinders (2) und des oberen Endes des Spritzenkolbens (3) in ihren Aufnahmen (30, 35),
- Kolbenstelleinrichtungen (37) zum Verschieben des Aufnahmekörpers (34) relativ zur Aufnahme (30),
- eine in der Aufnahme (30) angeordnete ringförmige Abtasteinrichtung (32) mit wenigstens 14 gleichmäßig über den Umfang verteilten Abtastelementen (47),
- eine Führungsstruktur (33) am Umfang der Aufnahme (30) zum Ausrichten einer weiteren Führungsstruktur (16) am Umfang des Spritzenzylinders (2) einer Spritze (1), um sieben gleichmäßig über den oberen Rand des Spritzenzylinders (2) verteilte Codierelemente (12) in Form von Erhebungen (12.1) und Vertiefungen (12.2) in einer für den Typ der Spritze (1) kennzeichnenden Anordnung einer Codierung der Spritze (1) und zwischen den Codierelementen (12) angeordnete Prüfelemente (13) in Form von weiteren Erhebungen (13.1) und Vertiefungen (13.2), wobei die Codierelemente (12) und die Prüfelemente (13) insgesamt sechs Erhebungen (12.1, 13.1) aufweisen, auf die Abtastelemente (47) der Abtasteinrichtung (32) auszurichten, und
- eine mit den Abtastelementen (47) verbundene elektronische Auswerteeinrichtung (44), die so beschaffen ist, dass sie beim Betätigen von genau sechs Abtastelementen (47) eine fehlerfreie Abtastung feststellt und nur im Falle einer fehlerfreien Abtastung die Dosiervorrichtung (28) in einen Betriebszustand steuert, der von der durch Auswertung der geschalteten Abtastelemente (47) ermittelten Codierung einer Spritze (1) abhängt.

9. Dosiervorrichtung nach Anspruch 8, bei der die elektronische Auswerteeinrichtung (44) so beschaffen ist, dass sie beim Betätigen einer anderen Anzahl als sechs Abtastelementen (47) eine fehlerhafte Abtastung feststellt und die Dosiervorrichtung (28) in einen Fehlerzustand steuert.

10. Dosiersystem umfassend mindestens eine Spritze (1) gemäß einem der Ansprüche 1 bis 7 und eine Dosiervorrichtung (28) gemäß einem der Ansprüche 8 bis 9.

11. Verfahren zum Betreiben eines Dosiersystems gemäß Anspruch 10, bei dem
- eine Spritze (1) gemäß einem der Ansprüche 1 bis 6 mit der Dosiervorrichtung (28) gemäß einem der Ansprüche 8 bis 9 unter Ausrichtung der Codierelemente (12) und der Prüfelemente (13) auf die Abtastelemente (47) der Dosiervorrichtung (28) lösbar verbunden wird,
- die Codierelemente (12) und Prüfelemente (13) mittels der Abtasteinrichtung (32) abgetastet werden und
- die Auswerteeinrichtung (44) nur dann, wenn sie das Betätigen von sechs Abtastelementen (47) feststellt, die Dosiervorrichtung (28) in einen Betriebszustand steuert, der von der durch die Abtasteinrichtung (32) ermittelten Codierung abhängt.

12. Verfahren nach Anspruch 11, bei dem die Auswerteeinrichtung (44) dann, wenn sie eine andere Anzahl als sechs Abtastelemente (47) festgestellt, die Dosiervorrichtung (28) in einen Fehlerzustand steuert.

## Claims

1. A syringe with a syringe cylinder (2) and a syringe plunger (3) for use with a metering device (28) for metering liquids in a laboratory, having a seat (30) for the syringe cylinder (2) and an axially displaceable plunger seat (35) for the syringe plunger (3) comprising:
- a code at the top edge of the syringe cylinder (2) with code elements (12) in the form of elevations (12.1) and recesses (12.2) at seven code positions evenly distributed in a peripheral direction (14.1 to 14.7) in an arrangement which characterizes the type of syringe (1),
- test elements (13) in the form of additional elevations (13.1) and additional recesses (13.2) at seven positions (15.1 his 15.7) of which each is arranged between two code positions (14.1 to 14.7) at the top edge of the syringe cylinder (2),
- wherein the code elements (12) and the test elements (13) have a total of six elevations (12.1, 13.1) and
- a guide structure (16) on the perimeter of the syringe cylinder (2) which has a specific position with reference to the code elements (12) and the test elements (13) in order to align the syringe (1) on another guide structure (33) in the seat (30) of the metering device (28) which has a specific position relative to an annular scanning device (32) for scanning the code with scanning elements (47) of the metering device (28) distributed evenly over the perimeter, with each code element (12) and each test element (13) on a scanning element (47).

2. The syringe according to claim 1, wherein the code elements (12) have at most five elevations (12.1), and the test elements (13) have at most one elevation (13.1).

3. The syringe according to claim 1 or 2 which has one of the following filling volumes and elevations (12.1) only at the code positions assigned to the respective filling volumes (14.1 to 14.7) 1 to 7 which, in a plan view, are arranged clockwise sequentially on the top edge of the syringe cylinder (2), wherein an additional elevation (13.1) is between at least two code positions (14.1 to 14.7) at a test position (15.1 to 15.7):
• 0.1 ml filling volume with elevations at code positions 4, 6 and 7,
• 0.2 ml filling volume with elevations at code positions 3, 6 and 7,
• 0.5 ml filling volume with elevations at code positions 2, 6 and 7,
• 1.0 ml filling volume with elevations at code positions 2, 5 and 7,
• 2.5 ml filling volume with elevations at code positions 2, 4, 5, 6 and 7,
• 5.0 ml filling volume with elevations at code positions 2, 3, 5, 6 and 7,
• 10 ml filling volume with elevations at code positions 3, 4, 5, 6 and 7,
• 25 ml filling volume with an elevation at code position 7,
• 50 ml filling volume with elevations at code positions 5, 6 and 7.

4. The syringe according to claim 3, which has one of the following filling volumes and elevations (13.1) only at the test positions (15.1 to 15.7) 1 to 7 assigned to the respective filling volumes, the test positions being arranged, in a plan view, sequentially clockwise at the top edge of the syringe cylinder (2):
• 0.1 ml filling volume with elevations at test positions 1, 2 and 4,
• 0.2 ml filling volume with elevations at test positions 1, 3 and 4,
• 0.5 ml filling volume with elevations at test positions 1, 3 and 4,
• 1.0 ml filling volume with elevations at test positions 1, 3 and 5,
• 2.5 ml filling volume with an elevation at test position 1,
• 5.0 ml filling volume with an elevation at test position 1,
• 10 ml filling volume with an elevation at test position 1,
• 25 ml filling volume with elevations at test positions 1, 2, 3, 4 and 5,
• 50 ml filling volume with elevations at test positions 1, 2 and 3.

5. The syringe according to one of claims 1 to 4, wherein the guide structures (16) are arranged at positions on the perimeter of the syringe cylinder (2), their spacing from each other corresponding to one-seventh, or a multiple of one-seventh, of the perimeter of the syringe cylinder (2) in order, on another guide structure (33) of a metering device (28), to align the code elements (12) of the syringe (1) with scanning elements (47) for code elements, and align the test elements (13) with scanning elements (47) for test elements.

6. The syringe according to one of claims 1 to 5 with a syringe cylinder (2) consisting of polypropylene, or polyethylene or a cyclical olefinic (CO) polymer, and/or with an injection plunger (3) consisting of polyethylene or polypropylene.

7. A syringe system comprising at least two syringes (1) with different codes according to one of claims 1 to 6.

8. A metering device for use with a syringe (1) with a syringe cylinder (2) and a syringe plunger (3) for metering fluids in a laboratory, comprising:
- a seat (30) for the top end of the syringe cylinder (2),
- a seat body (34) with a plunger seat (35) for the top end of the syringe plunger (3),
- holding devices (40, 41) for releasably holding the top end of the syringe cylinder (2) and the top in the syringe plunger (3) in their seats (30, 35),
- plunger adjusting devices (37) for moving the seat body (34) relative to the seat (30),
- an annular scanning device (32) arranged in the seat (30) with at least 14 scanning elements (47) evenly distributed over the perimeter,
- a guide structure (33) on the perimeter of the seat (30) for aligning an additional guide structure (16) on the perimeter of the syringe cylinder (2) of a syringe (1) in order to align seven code elements (12) evenly distributed over the top edge of the syringe cylinder (2) in the form of elevations (12.1) and recesses (12.2) in an arrangement of a coding of the syringe (1) characteristic of the type of the syringe (1), and test elements (13) arranged between the code elements (12) in the form of additional elevations (13.1) and recesses (13.2), wherein the code elements (12) and the test elements (13) have at least six elevations (12.1, 13.1), with the scanning elements (47) of these scanning device (32), and
- an electronic evaluation device (44) connected to the scanning elements (47) that are configured to identify flawless scanning when precisely six scanning elements (47) are actuated and, exclusively when scanning is flawless, force the dosing device (28) into an operating mode that depends on the code of a syringe (1) determined by the evaluation of the switched scanning elements (47).

9. The metering device according to claim 8, wherein the electronic evaluation device (44) is configured such that incorrect scanning is detected when a number of scanning elements (47) different from six is detected, and forces the metering device (28) into an error mode.

10. The metering system comprising at least one syringe (1) according to one of claims 1 to 7, and one metering device (28) according to one of claims 8 to 9.

11. A method for operating a metering system according to claim 10, wherein:
- a syringe (1) according to one of claims 1 to 6 is releasably connected to the metering device (28) according to one of claims 8 to 9 while aligning the code elements (12) and test elements (13) with the scanning elements (47) of the metering device (28),
- the code elements (12) and test elements (13) are scanned with the scanning device (32), and
- the evaluation unit (44) only forces the metering device (28) into an operating mode that depends on the code determined by the scanning device (32) when it detects the actuation of six scanning elements (47).

12. The method according to claim 11, wherein the evaluation device (44) forces the metering device (28) into an error mode when it determines a number of scanning elements (47) different from six.

## Revendications

1. Seringue avec un cylindre de seringue (2) et un piston de seringue (3) pour l'utilisation avec un dispositif de dosage (28) pour le dosage de liquides dans le laboratoire, avec un logement (30) pour le cylindre de seringue (2) et un logement de piston (35), déplaçable axialement, pour le piston de seringue (3), comprenant
- un codage sur le bord supérieur du cylindre de seringue (2) avec des éléments de codage (12) sous forme de parties surélevées (12.1) et de creux (12.2) sur sept positions de codage (14.1 à 14.7) réparties régulièrement dans la direction circonférentielle, dans un agencement caractéristique pour le type de seringue (1),
- des éléments de contrôle (13) sous forme d'autres parties surélevées (13.1) et d'autres creux (13.2) sur sept positions de contrôle (15.1 à 15.7) dont chacune est disposée entre deux positions de codage (14.1 à 14.7) sur le bord supérieur du cylindre de seringue (2),
- les éléments de codage (12) et les éléments de contrôle (13) présentant au total six parties surélevées (12.1, 13.1), et
- une structure de guidage (16) sur la circonférence du cylindre de seringue (2) qui présente un emplacement défini par rapport aux éléments de codage (12) et aux éléments de contrôle (13) pour aligner la seringue (1) sur un élément de palpage (47), avec chaque élément de codage (12) et avec chaque élément de contrôle (13), sur une autre structure de guidage (33) dans le logement (30) du dispositif de dosage (28) qui présente un emplacement défini par rapport à un dispositif de palpage (32) annulaire pour le palpage du codage avec des éléments de palpage (47) du dispositif de dosage (28) répartis régulièrement sur la circonférence.

2. Seringue selon la revendication 1, dans laquelle les éléments de codage (12) présentent au maximum cinq parties surélevées (12.1), et les éléments de contrôle (13) au minium une partie surélevée (13.1).

3. Seringue selon la revendication 1 ou 2 qui ne présente un des volumes de remplissage et une des parties surélevées (12.1) indiqués ci-dessous qu'aux positions de codage (14.1 à 14.7) 1 à 7 qui sont affectées au volume de remplissage respectif et qui sont disposées les unes derrières les autres, dans le sens horaire en vue de dessus, sur le bord supérieur du cylindre de seringue (2), un autre partie surélevée (13.1) étant présente entre au moins deux positions de codage (14.1 à 14.7) sur une position de contrôle (15.1 à 15.7).
• 0,1 ml de volume de remplissage avec des parties surélevées sur des positions de codage 4, 6 et 7,
• 0,2 ml de volume de remplissage avec des parties surélevées sur des positions de codage 3, 6 et 7,
• 0,5 ml de volume de remplissage avec des parties surélevées sur des positions de codage 2, 6 et 7,
• 1,0 ml de volume de remplissage avec des parties surélevées sur des positions de codage 2, 5 et 7,
• 2,5 ml de volume de remplissage avec des parties surélevées sur des positions de codage 2, 4, 5, 6 et 7,
• 5,0 ml de volume de remplissage avec des parties surélevées sur des positions de codage 2, 3, 5, 6 et 7,
• 10,0 ml de volume de remplissage avec des parties surélevées sur des positions de codage 3, 4, 5, 6 et 7,
• 25 ml de volume de remplissage avec une partie surélevée sur la position de codage 7,
• 50 ml de volume de remplissage avec des parties surélevées sur des positions de codage 5, 6 et 7.

4. Seringue selon la revendication 3, qui ne présente un des volumes de remplissage et une des parties surélevées (13.1) indiqués ci-dessous qu'aux positions de contrôle (15.1 à 15.7) 1 à 7 qui sont affectées au volume de remplissage respectif et qui sont disposées les unes derrière les autres, dans le sens horaire en vue de dessus, sur le bord supérieur du cylindre de seringue (2):
• 0,1 ml de volume de remplissage avec des parties surélevées sur les positions de contrôle 1, 2 et 4,
• 0,2 ml de volume de remplissage avec des parties surélevées sur les positions de contrôle 1, 3 et 4,
• 0,5 ml de volume de remplissage avec des parties surélevées sur les positions de contrôle 1, 3 et 4,
• 1,0 ml de volume de remplissage avec des parties surélevées sur les positions de contrôle 1, 3 et 5,
• 2,5 ml de volume de remplissage avec une partie surélevée sur la position de contrôle 1,
• 5 ml de volume de remplissage avec une partie surélevée sur la position de contrôle 1,
• 10,0 ml de volume de remplissage avec une partie surélevée sur la position de contrôle 1,
• 25 ml de volume de remplissage avec des parties surélevées sur les positions de contrôle 1, 2, 3, 4 et 5,
• 50 ml de volume de remplissage avec des parties surélevées sur les positions de contrôle 1, 2 et 3.

5. Seringue selon une des revendications 1 à 4, dans laquelle les structures de guidage (16) sont disposées sur des positions sur la circonférence du cylindre de seringue (2) dont la distance qui les sépare correspond à un septième ou à un multiple d'un septième de la circonférence du cylindre de seringue (2), pour, sur une autre structure de guidage (33) d'un dispositif de dosage (28), aligner avec les éléments de codage (12) la seringue sur des éléments de palpage (47) pour des éléments de codage et, avec des éléments de contrôle (13), aligner la seringue sur des éléments de palpage (47) pour des éléments de codage.

6. Seringue selon une des revendications 1 à 5, avec un cylindre de seringue (2) en polypropylène ou en polyéthylène ou en polymère cyclo-oléfinique (CO) et/ou avec un piston de seringue (3) en polyéthylène ou en polypropylène.

7. Système de seringue, comprenant au moins deux seringues (1) avec différents codages selon une des revendications 1 à 6.

8. Dispositif de dosage pour l'utilisation avec une seringue (1) avec un piston de seringue (3) et un cylindre de seringue (2) pour le dosage de liquide dans le laboratoire, comprenant
- un logement (30) pour l'extrémité supérieure du cylindre de seringue (2),
- un corps de logement (34) avec un logement de piston (35) pour l'extrémité supérieure du piston de seringue (3),
- des moyens de retenue (40, 41) pour la retenue détachable de l'extrémité supérieure du cylindre de seringue (2) et de l'extrémité supérieure du piston de seringue (3) dans leurs logements (30, 35),
- des dispositifs de réglage de piston (37) pour le déplacement du corps de logement (34) par rapport au logement (30),
- un dispositif de palpage (32) annulaire disposé dans le logement (30) avec au moins 14 éléments de palpage (47) répartis régulièrement sur la circonférence,
- une structure de guidage (33) sur la circonférence du logement (30) pour l'alignement d'une autre structure de guidage (16) située sur la circonférence du cylindre de seringue (2) d'une seringue (1) pour aligner sept éléments de codage (12), répartis régulièrement sur le bord supérieur du cylindre de seringue (2), sous forme de parties surélevées (12.1) et de creux (12.2) dans un agencement, caractéristique pour le type de seringue (1), d'un codage de la seringue (1) et des éléments de contrôle (13) disposés entre les éléments de codage (12) sous forme d'autres parties surélevées (13.1) et creux (13.2), les éléments de codage (12) et les éléments de contrôle (13) présentant au total six parties surélevées (12.1, 13.1), et
- un dispositif d'analyse (44) électronique raccordé aux éléments de palpage (47) qui est réalisé de telle sorte que, lors de l'actionnement de précisément six éléments de palpage (47), il constate un palpage dépourvu d'erreur et dirige, uniquement en cas de palpage dépourvu d'erreur, le dispositif de dosage (28) vers un état de fonctionnement qui dépend du codage d'une seringue (1) déterminé par analyse des éléments de palpage (47) couplés.

9. Dispositif de dosage selon la revendication 8, dans lequel le dispositif d'analyse (44) électronique est réalisé de telle sorte que, lors de l'actionnement d'un nombre d'éléments de palpage (47) différent de six, ils constate un palpage erroné et dirige le dispositif de dosage (28) vers un état d'erreur.

10. Système de dosage, comprenant au moins une seringue (1) selon une des revendications 1 à 7 et un dispositif de dosage (28) selon une des revendications 8 à 9.

11. Procédé de fonctionnement d'un système de dosage selon la revendication 10, dans lequel
- une seringue (1) selon une des revendications 1 à 6 est raccordée de façon détachable au dispositif de dosage (28) selon une des revendications 8 à 9 avec un alignement des éléments de codage (12) et des éléments de contrôle (13) sur les éléments de palpage (47) du dispositif de dosage (28),
- les éléments de codage (12) et les éléments de contrôle (13) sont palpés au moyen du dispositif de palpage (32), et
- le dispositif d'analyse (44) ne dirige le dispositif de dosage (28) vers un état de fonctionnement qui dépend du codage déterminé par le dispositif de palpage (32) que lorsqu'il constate l'actionnement de six éléments de palpage (47).

12. Procédé selon la revendication 11, dans lequel le dispositif d'analyse (44) dirige le dispositif de dosage (28) vers un état d'erreur quand il constate un nombre d'éléments de palpage (47) différent de six.
